# EUROPEAN PATENT APPLICATION

(11) **EP 1 491 432 A1**
(43) Date of publication of application: **29.12.2004**
(21) Application number: 03712896.4
(22) Date of filing: 25.03.2003
(51) Int. Cl.: B62D 57/02, B23K 9/00

(54) **DEVICE CAPABLE OF MOVING WHILE ADHERING TO OBJECT SURFACE UNDER LIQUID LEVEL**

(30) Priority: 28.03.2002 JP 2002090917
(71) Applicant: Urakami, Fukashi, Kanagawa 234-0054 (JP)
(72) Inventor: Urakami, Fukashi, Kanagawa 234-0054 (JP)
(74) Representative: Patentanwälte Hauck, Graalfs, Wehnert, Döring, Siemons, Schildberg
(86) International application number: PCT/JP2003/003585
(87) International publication number: WO 2003/082658

(57) **Abstract**

The objective of this invention is to provide a device capable of adhering to and moving along the surface of an object immersed in liquid, having two areas filled with gas that enable the surface of the object to be in contact with gas only, and capable of having devices that act on the surface of the object to be mounted at the said areas.

The invention comprises a device capable of adhering to and moving along the surface of an object immersed in liquid, comprising the main casing at least comprising an outer casing and an inner casing, an outer sealing member mounted at the opening of the outer casing, part of which is caused to contact the surface of the object, an inner sealing member mounted at the opening of the inner casing, part of which is caused to contact the surface of the object, and a means for moving along the surface of the object while maintaining the distance between the main casing and the surface of the object at a certain distance, wherein at least the outer casing, the outer sealing member and the inner sealing member, together with the surface of the object, define Area I, and at least the inner casing and the inner sealing member, together with the surface of the object, define Area II.

## Description

### TECHNICAL FIELD

This invention relates to a device capable of adhering to and moving along the surface of an object immersed in liquid.

This invention also relates to a device capable of adhering to and moving along the surface of an object immersed in liquid, having an area/areas filled with gas in which the surface of the object is in contact with the gas only, and having a device/s that acts on that portion of the surface of the object located within said area/s.

Such a device that is attached to the device of the present invention and acts on the surface of an object may be an electric arc thermal spraying device, for example, but is not limited thereto. An electric arc thermal spraying device is one of many thermal spraying devices. Generally, a thermal spraying device is a device that melts a metal, such as wire, or particles and sprays the molten minute particles onto the surface of an object for coating purposes. A thermal spraying device may use 1 or 2 wires or powder as a feeding material. Heating is done by electric arc or by flames.

In addition to thermal spraying devices, the device that is mounted onto the device of the present invention and acts on the surface of an object may include devices that allow molten materials to adhere to a surface, such as welding devices, devices that allow plastic sheets to adhere to a surface, devices that spray paint or glue onto a surface, devices that heat-process the surface of an object, and various other devices. These devices exhibit better performance when the surface is in contact with gas than when it is in contact with liquid.

### PRIOR ART

Examples of those devices that adhere to the surface of an object, when negative pressure is formed internally, and move along the surface include the one described below:

A device capable of adhering to and moving along various inclined or substantially vertical surfaces of ships, buildings, etc. was disclosed in Patent Application No. 60-26752 (U. S. Patent No. 4,095,378 Claims and Drawings).

The device comprises the main casing, a plurality of wheels secured to the main casing as a means for mobility, a sealing member connected to the main casing having a free end which is caused to contact the surface of an object, and a negative pressure forming means to discharge externally the liquid contained in an area defined by the main casing, the surface and the sealing member, the pressure of which is to be reduced. In such a device, the energization of the negative pressure forming means causes the liquid inside the said area to be discharged externally, and the pressure of the liquid that acts on the main casing because of the liquid pressure difference between the inside and the outside of the said area is transmitted to the surface of an object via the wheels, such liquid pressure allowing the device to adhere to the surface. Additionally, the rotation of the wheels by way of a driving means, such as an electric motor, during such adhesion state allows the device to move along the surface by the action of the wheels. Further, such a device has a remote-controlled working device, such as a means for blasting a cleaning and polishing material against the surface inside the said area, mounted thereon, allowing various operations on the surface of an object in a safe and efficient manner.

In order to use the above-described conventional device below the surface of a liquid, there are following problems to be solved.

The first problem is that, when a cleaning and polishing material is blasted onto the surface of an object immersed in liquid using compressed air, for example, to roughen the surface, upon which time, the used cleaning and polishing material is to be recovered and collected in a container located on land using air suction, the surrounding liquid must be disallowed to enter the blasting area of the cleaning and polishing material. There are various other operations that must also disallow the entry of liquid into the area of the surface of an object being worked on, similar to the case of the blasting operation of a cleaning and polishing material. For example, those operations that utilize a thermal spraying device, a welding device which adheres molten materials to surfaces, a device which adheres plastic sheets to surfaces, a device which sprays paint or glue onto surfaces, and a device which heat-processes surfaces are affected adversely by the entry of liquid into the area of the surface of an object being worked on. These devices exhibit better performance when the surface of the object being worked on is in contact with gas than when it is in contact with liquid.

A device that works on the surface of an object immersed in liquid whose performance is adversely affected by the entry of the liquid into the area of the surface of the object being worked on, as described above, needs to have an area free from the entry of liquid and filled with gas.

The second problem is that, when a metal, such as wire, or particles is/are molten and the molten minute particles are sprayed onto the surface of an object for coating purposes, i.e., when the surface of an object is thermal-sprayed, the surface of the object needs to be prepared in advance by blasting a cleaning and polishing material to roughen the surface. However, it is difficult to spray a molten material and to blast a cleaning and polishing material within the same space or area. In such a case, the device needs to have two areas; one area for spraying a molten material and the other area for blasting a cleaning and polishing material. Especially in case of a thermal spraying operation on the surface of an object immersed in liquid, the device must, as a necessary condition, have both the area for spraying a molten material and the area for blasting a cleaning and polishing material. In such a case, it is essential to be able to start spraying a molten material immediately upon completion of the blasting of a cleaning and polishing material. Additionally, the area of the surface of the object being blasted with a cleaning and polishing material or being sprayed with a molten material needs to be filled with gas to prevent liquid from entering therein.

The third problem is that, when the device immersed in liquid has an area filled with gas, the pressure of the area filled with gas needs to be controlled so that the difference between the pressure of the area filled with gas and the pressure of the liquid is kept constant as the liquid pressure may increase because it increases as the depth increases. If the liquid pressure is much greater than the pressure of the area filled with gas, the pressure of the liquid presses the area filled with gas against the surface of the object with great force, and the device will need extremely strong power to move along the surface.

Further, when compressed gas is jetted into the area filled with said gas, as in the case of the blasting operation of a cleaning and polishing material, the compressed air pressure needs to be controlled so that the difference between the pressure of the area filled with said gas and the pressure of the compressed gas is kept constant. If the difference between the pressure of the area filled with said gas and the pressure of the compressed gas decreases, the flow of the compressed gas will decrease, and the work being performed on the surface of an object using the compressed gas will suffer imperfection.

Further, when energized wire is fed into the area filled with gas through a flexible conduit, as in the case of the thermal-spraying operation of a molten material, the pressure of the gas inside the flexible conduit needs to be controlled so that the difference between the pressure of the liquid outside the flexible conduit and the pressure of the gas inside the flexible conduit is kept constant. If the pressure of the liquid outside the flexible conduit is greater than the pressure of the gas inside the flexible conduit, the liquid will enter the flexible conduit, and may destroy its electric non-conductance.

The fourth problem is that, when the device working on the surface of an object, such as a cleaning and polishing material jetting nozzle or a thermal spray gun, needs to be making reciprocating motion within the area filled with gas, and the reciprocating motion mechanism needs to be so constructed as to prevent the external liquid from entering the area filled with gas. Further, in order to be able to start thermal-spraying a molten material immediately upon completion of the blasting of a cleaning and polishing material, the reciprocating motion mechanism needs to be so constructed that the spraying gun will always be positioned behind the jetting nozzle in relation to the direction of the movement of the device.

Accordingly, technical objectives of the present invention are as follows:

The first technical objective of the present invention is to provide a device capable of adhering to the surface of an object immersed in liquid and moving along the surface that has an area filled with gas.

The second technical objective of the present invention is to provide a device capable of adhering to the surface of an object immersed in liquid and moving along the surface that has two areas filled with gas.

The third technical objective of the present invention is to control the pressure of the area/s filled with gas so that the difference between the pressure of the area/s filled with gas and the pressure of the liquid surrounding the device is kept constant when the pressure of the liquid increases, and to control the pressure of compressed gas, in case of jetting compressed gas into the area/s filled with gas, so that the difference between the pressure of the area/s filled with gas and the pressure of the compressed gas is kept constant, and to control the pressure of the gas inside a flexible conduit, in case of feeding energized wire into the area/s filled with gas through a flexible conduit/s, so that the difference between the pressure of the liquid outside the flexible conduit/s and the pressure of the gas inside the flexible conduit/s is kept constant.

Described above were problems associated with prior art and technical objectives intended to be solved by the present invention of a device capable of adhering to and moving along the surface of an object immersed in liquid.

### SUMMARY OF THE INVENTION

Provided according to the present invention in order to solve the technical problems described above is a device capable of adhering to and moving along the surface of an object immersed in liquid, comprising the main casing at least comprising an outer casing and an inner casing; an outer sealing member mounted at the opening of the outer casing, part of which is caused to contact the surface of the object; an inner sealing member mounted at the opening of the inner casing, part of which is caused to contact the surface of the object; and a means for moving along the surface of the object while maintaining the distance between the main casing and the surface of the object at a certain distance, as described in Claim 1 above, wherein at least the outer casing, the outer sealing member and the inner sealing member, together with the surface of the object, define Area I, and at least the inner casing and the inner sealing member, together with the surface of the object, define Area II.

Also provided is a device capable of adhering to and moving along the surface of an object immersed in liquid described in Claim 1 above, wherein the pressure of the gas in Area I is maintained at a higher level than the pressure of the liquid surrounding the device, and the pressure of gas in Area II is maintained at a lower level than the pressure of gas in Area I, as described in Claim 2 above.

Also provided is a device capable of adhering to and moving along the surface of an object immersed in liquid described in Claims 1 and 3 above, wherein the outer sealing member is so shaped as to be caused to be pressed against the surface of the object by the difference in pressure between the pressure of gas in Area I and the pressure of the liquid surrounding the device, and the inner sealing member is so shaped as to be caused to be pressed against the surface of the object by the difference in pressure between the pressure of gas in Area I and the pressure of gas in Area II, as described in Claim 3 above.

Also provided is a device capable of adhering to and moving along the surface of an object immersed in liquid described in Claims 1 through 3 above, wherein Area I is connected to the source of compressed gas through a flexible hose with a pressure control valve V1 in place between Area I and the source of compressed gas, and Area II is connected to the source of vacuum through a flexible hose with a pressure control valve V2 in place between Area II and the source of vacuum, as described in Claim 4 above.

Also provided is a device capable of adhering to and moving along the surface of an object immersed in liquid described in Claim 4 above, wherein the pressure control valve V1 is so controlled as to achieve P1 = Pw + Pm while the value of Pw may fluctuate, where Pw is the gauged pressure of the liquid surrounding the device adhering to the surface of the object immersed in liquid, P1 is the gauged pressure of the gas in Area I, and P2 is the gauged pressure of the gas in Area II, and the pressure control valve V2 is so controlled as to achieve P2 = Pw - Pn, where the value of Pm may be selected from the pressure range between 20 mmHg and 500 mmHg and the value of Pn may be selected from the pressure range between 20 mmHg and 500 mmHg, as described in Claim 5 above.

Also provided is a device capable of adhering to and moving along the surface of an object immersed in liquid described in Claims 1 through 5, wherein a hole is made at the lower part of Area I to discharge liquid externally, as described in Claim 6 above.

Also provided is a device capable of adhering to and moving along the surface of an object immersed in liquid described in Claims 1 through 6, wherein a device that acts on the surface of the object is arranged at Area I or Area II or at both Area I and Area II, as described in Claim 7 above.

Also provided is a device capable of adhering to and moving along the surface of an object immersed in liquid described in Claim 7, having a nozzle, which constitutes part of the device that acts on the surface of the object, that jets out compressed gas, and having an opening where the spout of the nozzle is connected to Area I or the inside of Area I, and a pressure valve Vg that supplies compressed gas to the nozzle is so controlled as to achieve PG = Pw + Pm + Pg while the value of Pw may fluctuate, where PG is the gauged pressure of the pressure control valve Vg, where the value of Pg may be selected from the pressure range equal to or higher than 2 kgf/cm2, as described in Claim 8 above.

Also provided is a device capable of adhering to and moving along the surface of an object immersed in liquid described in Claim 7, having a nozzle, which constitutes part of the device that acts on the surface of the object, that jets out compressed gas, and having an opening where the spout of the nozzle is connected to Area II or the inside of Area II, and a pressure valve Vb that supplies compressed gas to the nozzle is so controlled as to achieve PB = Pw - Pn + Pb while the value of Pw may fluctuate, where PB is the gauged pressure of the pressure control valve Vb, where the value of Pb may be selected from the pressure range equal to or higher than 2 kgf/cm2, as described in Claim 9 above.

Also provided is a device capable of adhering to and moving along the surface of an object immersed in liquid described in Claim 7, having a flexible conduit through which energized wire, such as wire for a thermal spray gun which constitutes part of the device that acts on the surface of the subject, passes through, and having an opening where the downstream side exit of the flexible conduit is connected to Area I or the inside of Area I, with compressed gas injected into the flexible conduit and its pressure so controlled as to achieve PC = Pw + Pm or PC□Pw + Pm while the value of Pw may fluctuate, where PC is the gauged pressure of the internal gas at the closest proximity to the downstream side exit of the flexible conduit, as described in Claim 10.

Also provided is a device capable of adhering to and moving along the surface of an object immersed in liquid described in Claim 7, having a flexible conduit through which energized wire, such as wire for a thermal spray gun which constitutes part of the device that acts on the surface of the subject, passes through, and having an opening where the downstream side exit of the flexible conduit is connected to Area II or the inside of Area II, with compressed gas injected into the flexible conduit and its pressure so controlled as to achieve PC□Pw while the value of Pw may fluctuate, where PC is the gauged pressure of the internal gas at the closest proximity to the downstream side exit of the flexible conduit, as described in Claim 11 above.

Also provided is a device capable of adhering to and moving along the surface of an object immersed in liquid described in Claims 7 through 11, having a ring-shaped sliding member constituting part of the outer casing, or having a ring-shaped sliding member constituting part of the inner casing, or having a ring-shaped sliding member constituting part of the outer casing and a ring-shaped sliding member constituting part of the inner casing, such sliding member/s making circular motion on the plane parallel to the surface of the object, and having a device that acts on the surface of the object mounted on the sliding member/s, as described in Claim 12 above.

Also provided is a device capable of adhering to and moving along the surface of an object immersed in liquid described in Claim 12, wherein the outer sliding member or the inner sliding member or both the outer sliding member and the inner sliding member make/s repetitious circular motion in oscillation clockwise and counterclockwise in any angular range of maximum 90 degrees counterclockwise and maximum 90 degrees clockwise, totaling 180 degrees in maximum, in the direction of the movement of the device with that direction as the center line, as described in Claim 13 above.

Also provided is a device capable of adhering to and moving along the surface of an object immersed in liquid described in Claim 13, wherein the outer sliding member has a device that acts on the surface of the object in the opposite direction of approximately 180 degrees of the direction of the movement of the device, the said outer sliding member making repetitious circular motion in oscillation clockwise and counterclockwise in any angular range of maximum 90 degrees counterclockwise and maximum 90 degrees clockwise, totaling 180 degrees in maximum, in the direction of the movement of the device with that direction as the center line, and, when the direction of the movement of the device is reversed by 180 degrees, the said outer sliding member rotating approximately 180 degrees, i.e., the device that acts on the surface of the object moving to the opposite direction of approximately 180 degrees to face the new direction, followed by the outer sliding member making repetitious circular motion in oscillation clockwise and counterclockwise in any angular range of maximum 90 degrees counterclockwise and maximum 90 degrees clockwise, totaling 180 degrees in maximum, in the new direction of the movement of the device with that new direction as the center line, as described in Claim 14 above.

Also provided is a device capable of adhering to and moving along the surface of an object immersed in liquid described in Claims 1 through 14, having a nozzle constituting part of the device acting on the surface of the object that jets out compressed gas and having an opening where the spout of the nozzle is connected to Area II or the inside of Area II, and having a valve which connects Area I and Area II, wherein the valve is open when there is no compressed gas jetted out of the nozzle and the valve is closed when there is compressed gas jetted out of the nozzle, as described in Claim 15 above.

The device of the present invention is so made that the pressure of the gas in Area I is maintained at a higher level than the pressure of the liquid that surrounds the device, thereby preventing the liquid from entering Area I, and that the pressure of the gas in Area II is maintained at a lower level than the pressure of the liquid that surrounds the device, thereby enabling the device to adhere to the surface of an object by the action of negative pressure. Further, the means for maintaining the distance between the main casing and the surface of an object at a certain distance and moving along the surface of the object enables the device to move along the surface of the object while adhering to the surface of the object immersed in liquid.

Further, the device has two areas: Area I and Area II, and Area I may be used as the area for thermal-spraying a molten material, for example, and Area II may be used as the area for blasting a cleaning and polishing material, for example.

Further, the device is so made as to controls the pressure of the areas filled with gas so that the difference between the pressure of the areas filled with gas and the pressure of the liquid surrounding the device is kept constant when the pressure of the liquid increases as the depth increases.

Further, the device is so made as to controls the pressure of the gas inside a flexible conduit when energized wire is fed into one of the areas filled with gas through the flexible conduit so that the difference between the pressure of the liquid outside the flexible conduit and the pressure of the gas inside the flexible conduit is kept constant.

Further, the mechanism that allows a device which acts on the surface of an object, such as a cleaning and polishing material jetting nozzle or a thermal spray gun, to make reciprocal motion within the area filled with gas and along the surface of the object disallows external liquid to enter the area filled with gas.

Further, the thermal spray gun is always positioned behind the cleaning and polishing material jetting nozzle in relation to the direction of the movement of the device so that a molten material may be sprayed immediately upon completion of the blasting operation of a cleaning and polishing material.

### BRIEF EXPLANATIONS OF THE DRAWINGS

Fig. 1 is a top view of a preferred embodiment of the device configured according to the present invention.

Fig. 2 is a right side view of the device shown in Fig. 1

Fig. 3 is a bottom view of the device shown in Fig. 1.

Fig. 4 is a sectional view along the line A - A of the device shown in Fig. 1.

Fig. 5 is a sectional view along the line B-B of the device shown in Fig. 1.

Fig. 6 is a sectional view along the line C-C of the device shown in Fig. 1.

Fig. 7 is an enlarged sectional view along the line D-D of the device shown in Fig. 1

Fig. 8 is an enlarged sectional view along the line E-E of the device shown in Fig. 1.

Fig. 9 is an enlarged sectional view along the line F-F of the device shown in Fig. 1.

Fig. 10 is a diagram showing the overall system of the device configured according to the present invention.

Fig. 11 is a diagram showing the overall system of the electric arc thermal spraying device configured according to the present invention.

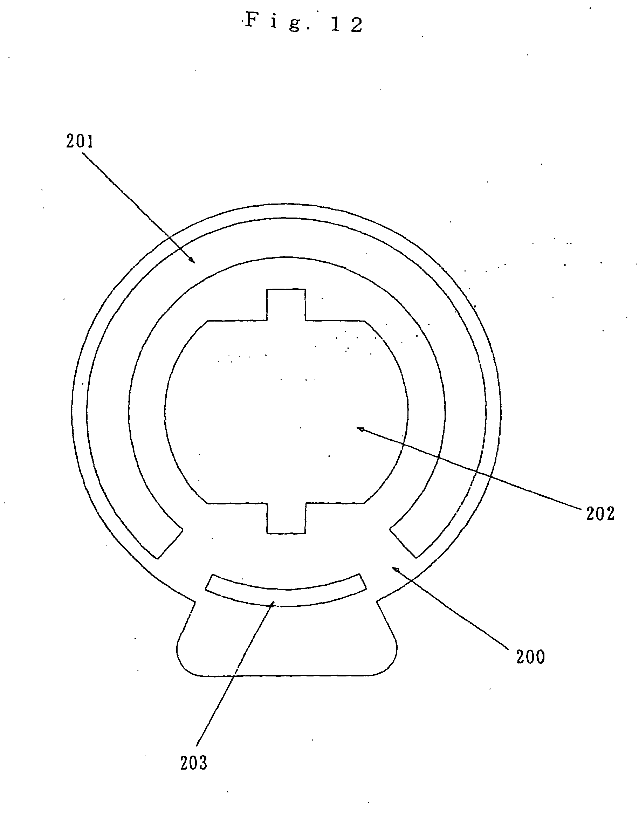

Fig. 12 is a diagram of the disc-shaped member 200 of the device shown in Fig. 4 through Fig. 6 (Fig. 6a).

### DETAILED DESCRIPTIONS OF PREFERRED EMBODIMENTS

Preferred embodiments of the device configured according to the present invention will be described in detail below, referring to the figures attached hereto.

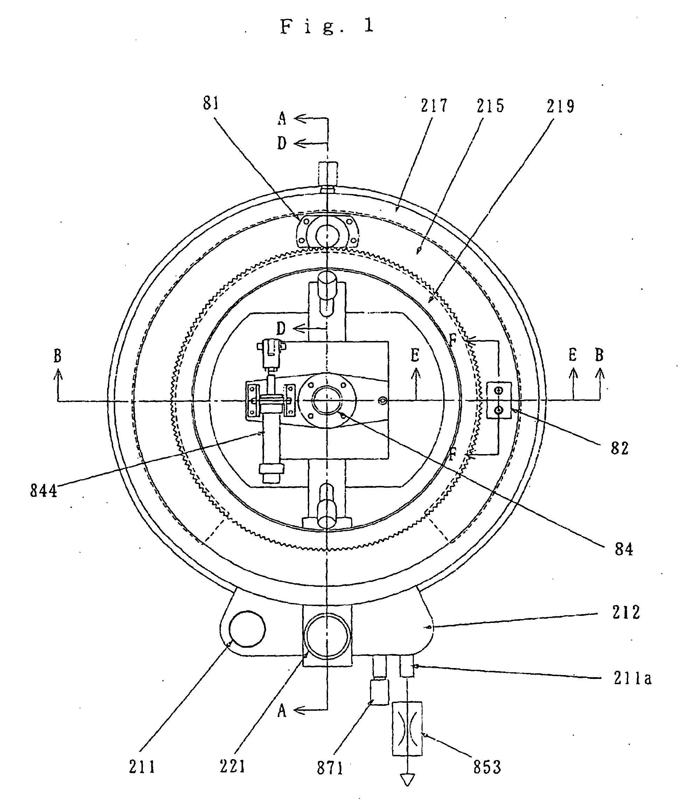

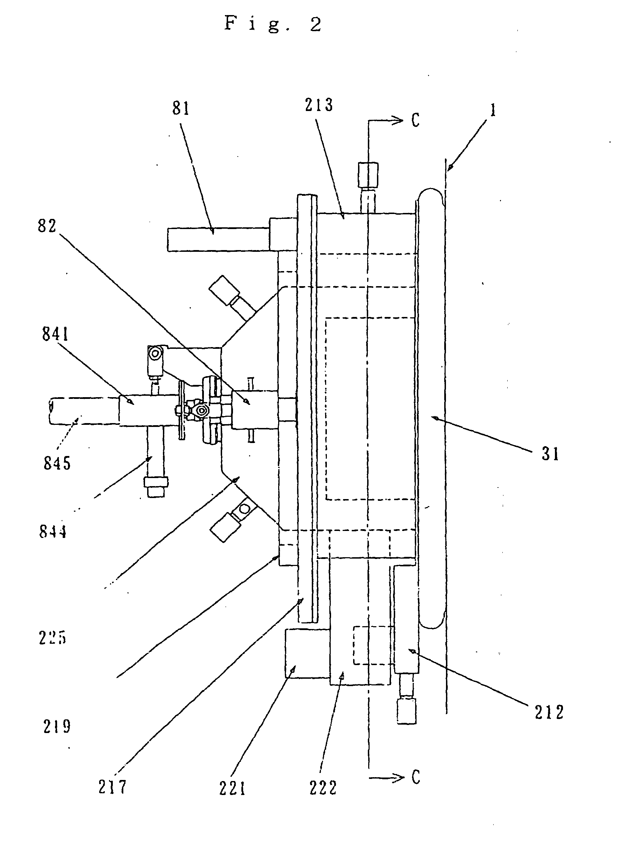

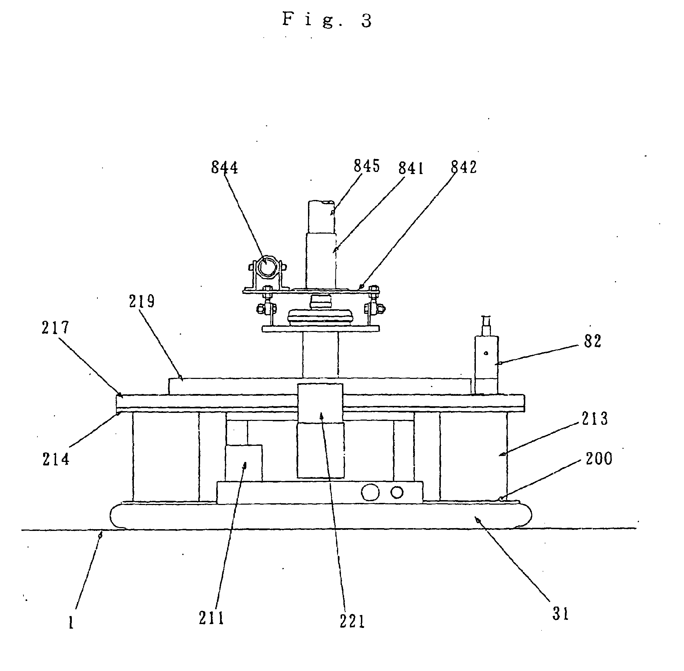

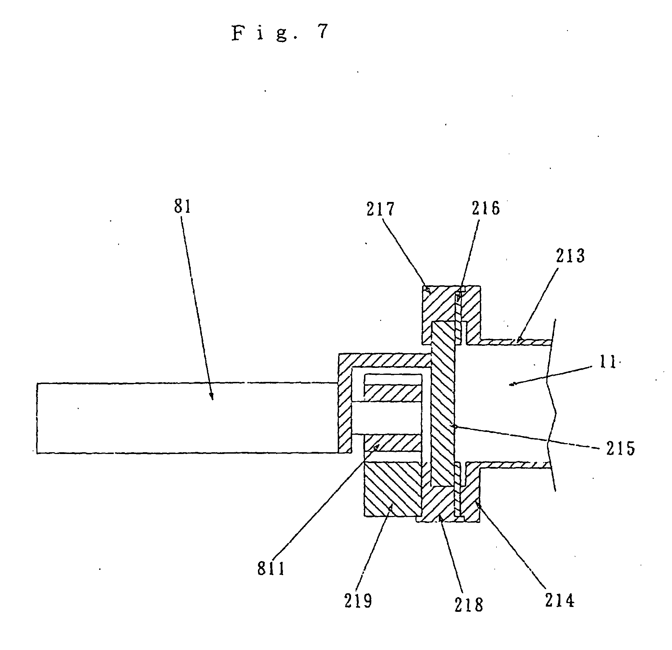

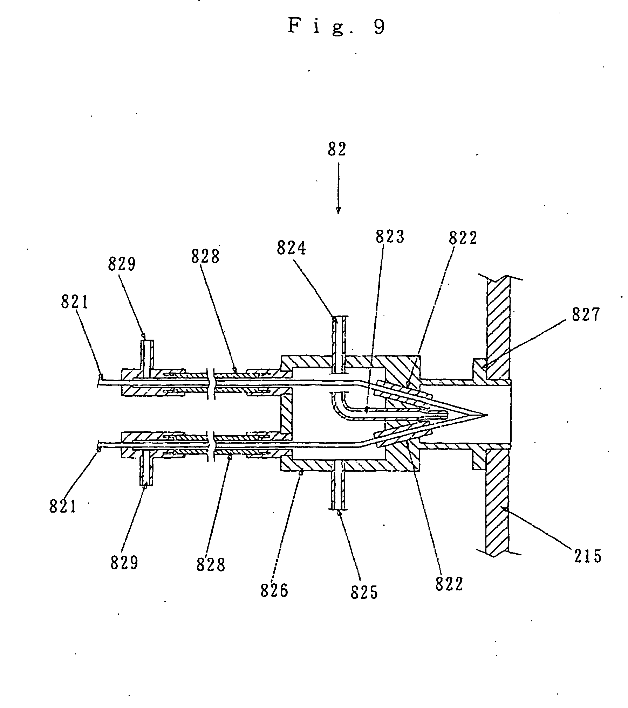

In reference to Fig. 1 through Fig. 11, the device illustrated therein is closely adhered to the surface of an object 1 immersed in liquid and moves in the right or left direction, as shown in Fig. 1.

The illustrated device has the main casing 2. The main casing 2, made of a rigid material, consists of an outer casing 21 and an inner casing 22 as generally divided from the functional point of view. However, as divided from the point of view of the members comprising the main casing 2, some of the members may serve both as the outer casing 21 and the inner casing 22. For example, in case of the disc-shaped member 200, the portion in the peripheral direction from the portion where the inner sealing member 32 is mounted belongs to the outer casing 21, and the portion in the central direction from the portion where the inner sealing member 32 is mounted belongs to the inner casing 22.

A list of major members comprising the outer casing 21 includes the disc-shaped member 200 of approximately the shape of a ring having a circular hole 201 that lacks the portion at approximately 80 degrees; a circular tube member 213 that lacks the portion at approximately 80 degrees whose open end is welded onto the periphery of the circular hole 201; a completely circular flange member 214 welded to the open end in the opposite direction of the surface of the object 1 of the circular tube member 213 and having a circular hole that lacks the portion at approximately 80 degrees with the inside of the welded area hollowed out; a completely circular sliding plate member 215 made of a plastic material with a low friction co-efficient, such as high polymer polyethylene; the outer flange member 217 and the inner flange member 218 that, together with the flange member 214, sandwich the sliding plate member 215 with slight clearance maintained so that the sliding plate member 215 may freely make circular motion with no resistance; the sealing plate member 216 in a complete circular shape made of an elastic material, such as rubber, having a circular hole that lacks the portion at approximately 80 degrees with the portion facing the circular hole of the flange member 214 hollowed out; an approximately box-shaped member A212 welded to the periphery of the arc-shaped hole 203 formed as a result of the portion at about 50 degrees of the lower portion of the disc-shaped member 200 hollowed out; and a medium-size connecting pipe member 211 and a small-size connecting pipe 211a welded to the box-shaped member A212.

A list of major members comprising the inner casing 22 includes the disc-shaped member 200 having a hole 202 whose central area is hollowed out in approximately the shape of a "+"; and a composite tube member 220 comprising 5 members in rough division and welded to the periphery of the hole 202 in approximately the shape of a "+" of the disc-shaped member 200. The composite tube member 220 has the left tube member 223 that has the shape of a "C" in the cross section parallel to the surface of the object 1 and is open at the end of the side of the surface of the object 1 and is closed with a plate at the end of the opposite side of the surface of the object 1; the right tube member 224 that has the shape of a reversed "C" in the cross section parallel to the surface of the object 1 and is open at the end of the side of the surface of the object 1 and is closed with a plate at the end of the opposite side of the surface of the object 1; a square plate member 227 having a circular hole 226 that is open on the side of the surface of the object 1 and hollowed out in a small circle on the side opposite from the surface of the object and welded to the periphery of the circular hole 226; a box-shaped central pipe member 225 having a small-size cylindrical member 228 similarly welded to the periphery of the circular hole 226; a box-shaped member B222 welded to the periphery of a rectangular-shaped hole hollowed out on the bottom side of the central pipe member 225 with the welded area opened; and a large-size connecting pipe member 221 welded to the box-shaped member B222.

Fixed with bolts and nuts onto the disc-shaped member 200 of the outer casing 21 is the outer sealing member 31 made of a relatively elastic material, such as polyurethane rubber or plastic, for example. The outer sealing member 31 has the overall shape of approximately a ring with its free end protruding into the device along the surface of the object 1.

Fixed with bolts and nuts onto the disc-shaped member 200 of the inner casing 22 is the inner sealing member 32 made of a relatively elastic material, such as polyurethane rubber or plastic, for example. The inner sealing member 32 has the overall shape of approximately a ring with its free end protruding out of the device along the surface of the object 1.

At least the outer casing 21, the outer sealing member 31 and the inner sealing member 32, together with the surface of the object 1, define Area I 11.

At least the inner casing 22 and the inner sealing member 32, together with the surface of the object 1, define Area II 12.

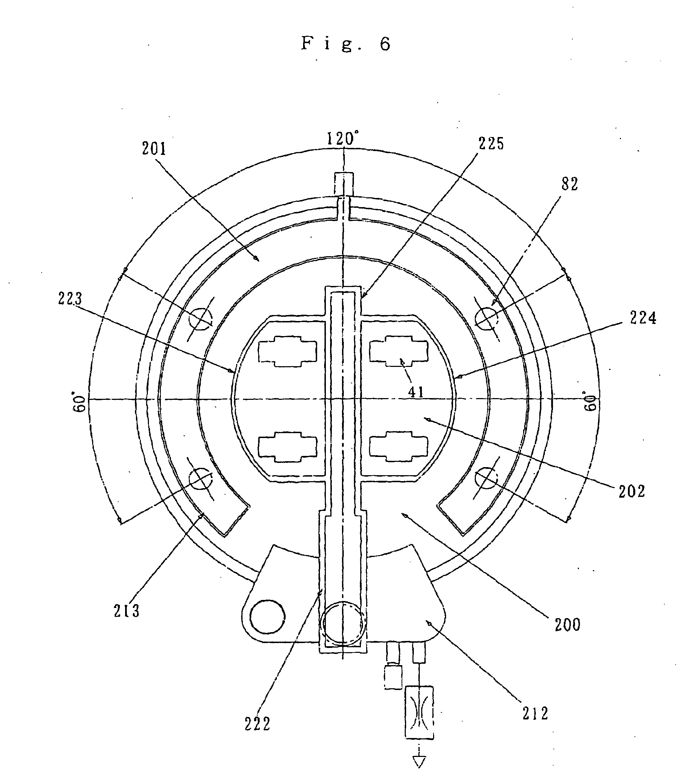

Fixed onto the sliding plate member 215 which is one of the members comprising the outer casing 21 is an electric arc thermal spray gun 82 that thermal-sprays the surface of the object 1 inside Area II 11. Also fixed thereon with supporting metal fittings is a geared air motor 81. Fixed onto the inner flange member 218 is a ring gear 219 with cogs in the periphery that engages the gear wheel 811 that is fixed onto the output shaft of the geared air motor 81. When the geared air motor 81 is turned on, therefore, the sliding plate member 215, together with the electric arc thermal spray gun 82 and the geared air motor 81, moves around the ring gear 219 while making circular motion. As is illustrated in Fig. 6, the angular range of the circular motion that the sliding plate member 215, the electric arc thermal spray gun 82 and the geared air motor 81 are capable of making is maximum 240 degrees. Fig. 1 illustrates the position of the electric arc thermal spray gun 82 when the device of an embodiment example of the present invention moves to the left. The electric arc thermal spray gun 82 makes repetitious circular motion in oscillation of 60 degrees clockwise and 60 degrees counterclockwise within the angular range of 30 degrees clockwise and 30 degrees counterclockwise, totaling 60 degrees, with the position shown in Fig. 1 as the central position. The position of the electric arc thermal spray gun 82 when the device of an embodiment example of the present invention moves to the right is on the opposite side by 180 degrees of the position shown in Fig. 1. In this case, the electric arc thermal spray gun 82 makes repetitious circular motion in oscillation of 60 degrees clockwise and 60 degrees counterclockwise within the angular range of 30 degrees clockwise and 30 degrees counterclockwise, totaling 60 degrees, with the position 180 degrees rotated and moved from the position shown in Fig. 1 as the central position. That is to say that, in order to start a spraying operation of a molten material immediately upon completion of a blasting operation of a cleaning and polishing material, the electric arc thermal spray gun 82 is always positioned behind the cleaning and polishing material jetting nozzle 84 in relation to the direction of the movement of the device.

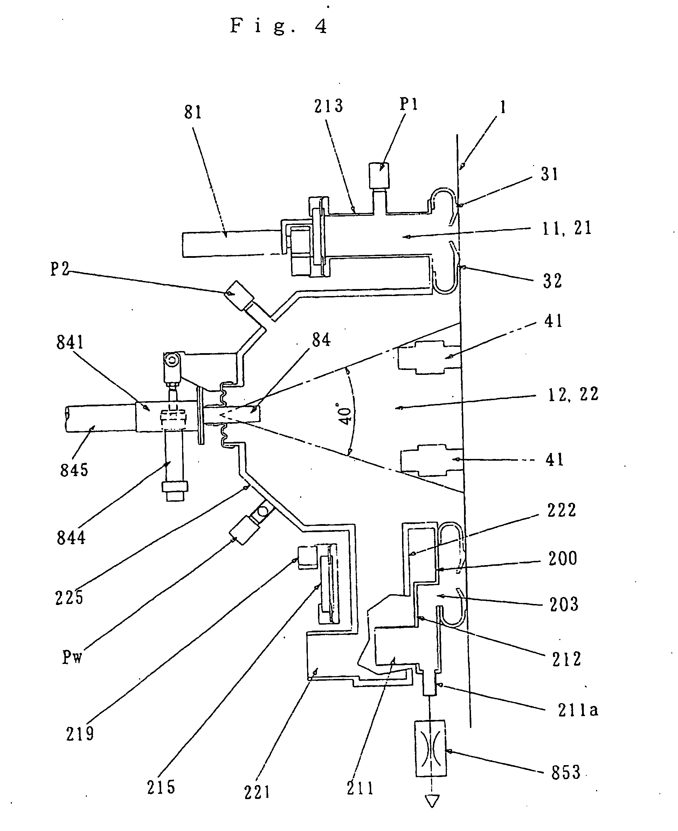

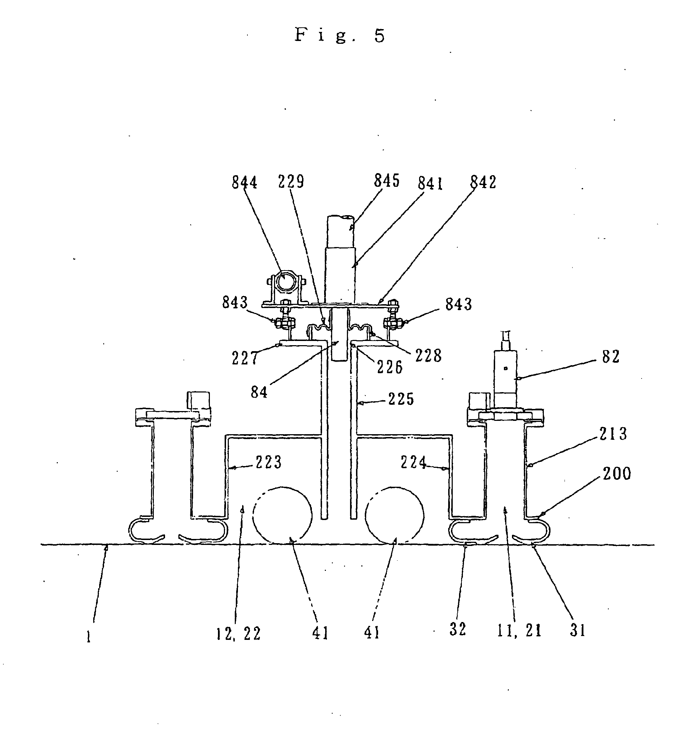

The square plate member 227 welded to the central pipe member 225 which is one of the members comprising the inner casing 22 has a publicly known oscillating mechanism to continuously oscillates the nozzle 84 that jets out a cleaning and polishing material toward the surface of the object 1 within Area II at the angle of approximately 40 degrees, as illustrated in Fig. 4 and Fig. 5, using compressed air, and an air cylinder 844 that is the oscillation driving source. Fixed onto the plate 842 that oscillates with 2 pairs of pins 843 as the oscillating fulcrum is a nozzle holder 841. The nozzle holder 841 connects and holds the cleaning and polishing material jetting nozzle 84 and a blast hose 845. Installed between the small-size cylindrical member 228 and the cleaning and polishing material jetting nozzle 84 is a bellows-shaped sealing member 229 made of an elastic material, such as rubber. The oscillating mechanism for the cleaning and polishing material jetting nozzle 84 is not crucial in the present invention and any such publicly known mechanism as illustrated here may be used. If desired, an oscillating mechanism similar to the oscillating mechanism for the electric arc thermal spray gun 82 equipped by the device of an embodiment example of the present invention may be used.

A cleaning and polishing material blasting device which includes the cleaning and polishing material jetting nozzle 84 is a device that provides a preparatory process to the surface of the object 1 prior to a thermal spraying operation applied thereto. It is a device indispensable for a thermal spraying operation as it jets out cleaning and polishing particles toward the surface of the object 1 at a high speed using compressed air to roughen the surface.

Neither the type or structural details of the cleaning and polishing material blasting device is crucial in the present invention, nor should it be limited to the embodiment example of the present invention. Other shapes may also be used.

The device of an embodiment example of the present invention has four wheels 41 inside the main casing 2 (illustrated with an imaginary line). The wheels 41 have the function of maintaining the gap between the main casing 2 and the surface of the object 1 at a constant distance and receiving the pressing pressure of the surrounding liquid that acts on the main casing 2 in the direction of the surface of the object 1. Connecting the wheels 41 to a driving means, such as a geared motor (not illustrated), enables the device of an embodiment example of the present invention to gain mobility. However, the wheels 41 do not need to be connected to a driving means, such as a geared motor (not illustrated) when external power is used to move the device of an embodiment example of the present invention along the surface of the object 1. In such a case, the wheels are used as free rotating slave wheels. The mechanism that enables the wheels 41 to hold onto the main casing 2 is not crucial in the present invention; any publicly known mechanism may be used.

As stated above, the device of an embodiment example of the present invention has an electric arc thermal spraying device that includes an electric arc thermal spray gun 82 as one of the devices that act on the surface of the object 1.

The configuration of a traditional electric arc thermal spraying device is described below.

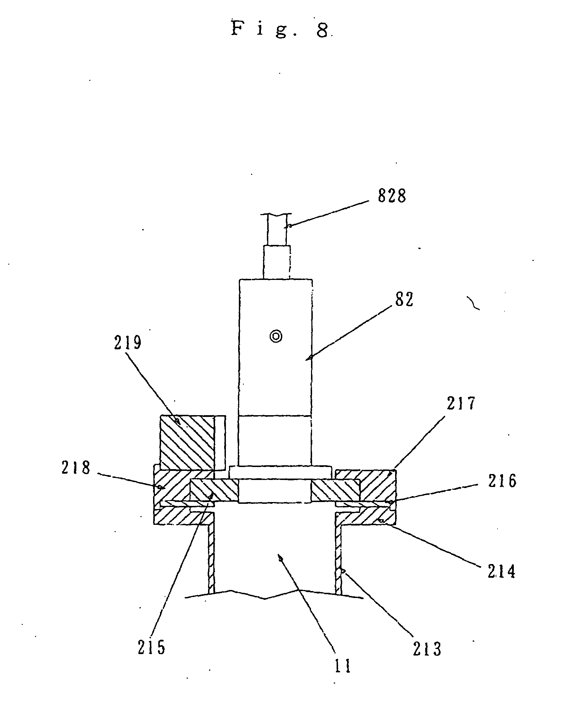

As shown in Fig. 8, Fig. 9 and Fig. 11, two wires for thermal spraying made of such metal as zinc or aluminum 821 (hereinafter referred to as the "wires 821") are fed to the electric arc thermal spray gun 82 through flexible conduits 828 by a wire feeding device 83 that has a wire reel. Inside the electric arc thermal spray gun 82, the wires 821 are fed to the wire nozzles 822. current-carrying terminals either for AC or DC (not illustrated) installed within the wire nozzles 822 energize each of the wires 821. The wires 821 generate arc by cross-contacting when the wire nozzles 822 are exited. At this time, the wires 821 are instantaneously heated by the heat of the arc and melt into minute particles, which are in turn made into finer particles (or a mist-like state) by the action of compressed gas such as compressed air jetted out of a gas nozzle 823 situated midway between the two wire nozzles 822, which particles are dispersed while being cooled and collide against the surface of the object, forming molten metal film.

Generally, the arc current is several hundred amperes.

The gun casing 826 of the electric arc thermal spraying device that contacts the wires 821 and the wire nozzles 822, among other members, is made of an electrically nonconductive material, such as hard plastic.

The system of a wire feeding mechanism and the arrangement of the wire feeding device 83 are not crucial in the present invention. Any other appropriate or common feeding mechanism may be used, and the feeding mechanism may be arranged within the electric arc thermal spray gun 82, as widely known.

Neither the type or structural details of the electric arc thermal spraying device as described above are crucial in the present invention, nor should it be limited to the embodiment example of the present invention. Other shapes may also be used.

Further, the device mounted onto the device of the present invention that acts on the surface of the object 1 is not limited to the electric arc thermal spraying device. The electric arc thermal spraying device is only one of many thermal spraying devices. Generally, a thermal spraying device is a device that melts a metal, such as wire, or particles and sprays the molten minute particles onto the surface of an object to form coating. A thermal spraying device may use 1 or 2 wires or powder as a feeding material. Heating is done by electric arc or by flames.

Further, in addition to thermal spraying devices, other devices that act on the surface of an object which may be mounted onto the device of the present invention include devices that allow molten materials to adhere to a surface, such as welding devices, devices that allow plastic sheets to adhere to a surface, devices that spray paint or glue onto a surface, devices that heat-process the surface of an object, and various other devices. These devices exhibit better performance when the surface is in contact with gas than when it is in contact with liquid.

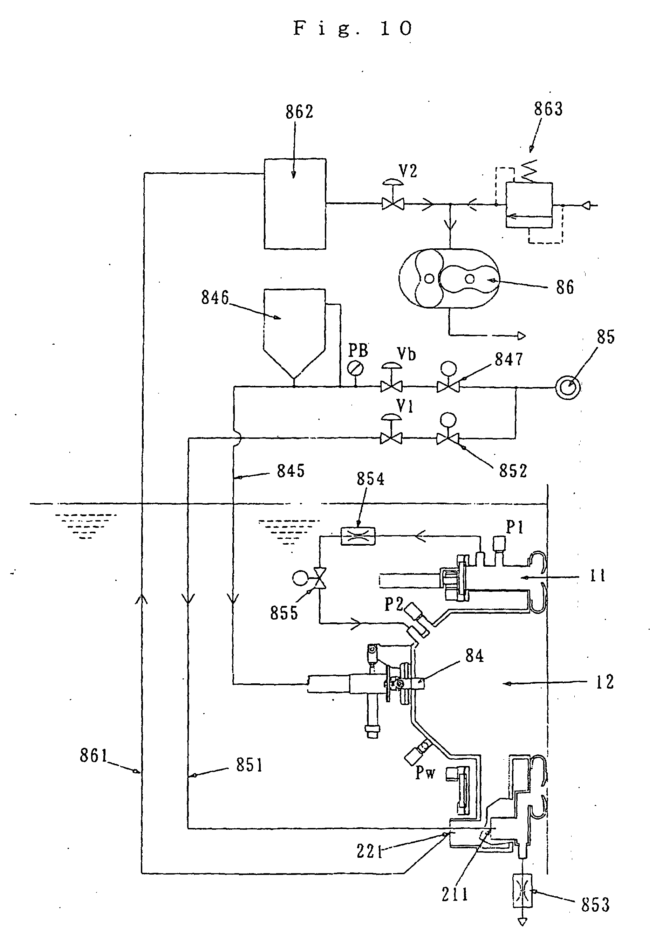

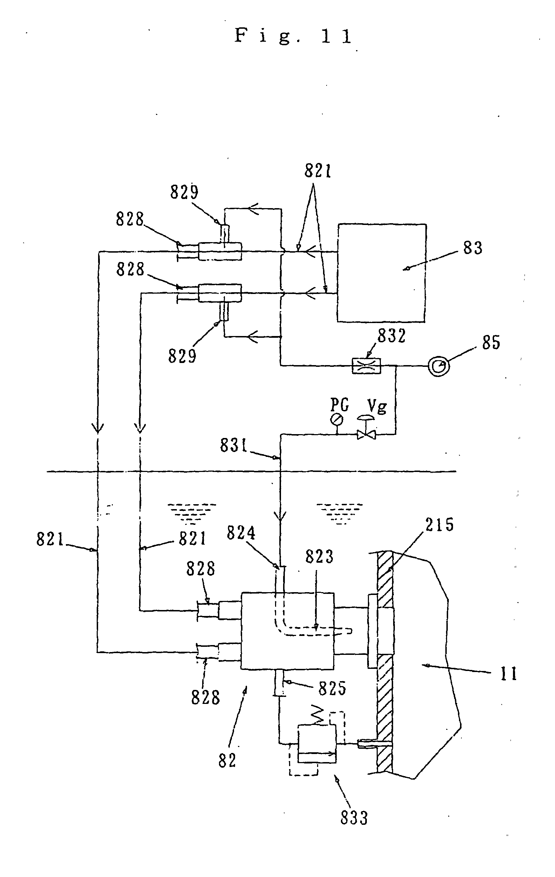

The entire system of the device of an embodiment example of the present invention will be described next in reference to Fig. 10 and Fig. 11 mainly. The device capable of adhering to and moving along the surface of the object 1 immersed in liquid will be referred to as the "Device" below. The arrows above the lines depicting piping and wire show the direction of the flow of liquid and of the feeding of wire.

Mainly in reference to Fig. 10, the medium-size connecting pipe member 211 of Area I 11 of the Device is connected to a pressure control valve V1, an electromagnetic valve 852 and an air compressor 85 in that order from the downstream side by an air hose 851. The air compressor 85 has sufficient discharge capacity and sufficient discharge pressure.

Area I 11 has a pressure sensor P1 that detects internal pressure.

The large-size connecting pipe member 221 of Area II 12 is connected to a cleaning and polishing material collector/dust collector 862, a pressure control valve V2 and a Roots vacuum pump 86 in that order from the upstream side by an air hose 861 that also serves as a suction hose. The Roots vacuum pump 86 has sufficient suction capacity and sufficient suction pressure. To prevent seizure caused by excessive vacuum, the Roots vacuum has a vacuum breaker 863 at the input side thereof that has the function of lowering the intensity of vacuum by sucking in external air in case excessive vacuum occurs.

Area II 12 has a pressure sensor P2 that detects internal pressure.

A pressure sensor Pw that detects the pressure of the liquid surrounding the Device is installed outside Area II 12.

The small-size connecting pipe member 211a of Area I 11 has a flow control valve 853 to discharge externally the liquid that entered Area I 11. An electrode sensor 871 that detects any liquid inside Area I 11 is installed at the lower portion of Area I 11.

Installed between Area I 11 and Area II 12 are a flow control valve 854 and an electromagnetic valve 855 in that order from the upstream side. The electromagnetic valve 855 is open when the cleaning and polishing material jetting nozzle 84 is not jetting out compressed air and is closed when the cleaning and polishing material jetting nozzle 84 is jetting out compressed air. The flow control valve 854 controls gas flow so that the flow of gas per unit hour that flows through the electromagnetic valve 855 when the electromagnetic valve 855 is open is approximately the same as the flow of compressed air per unit hour that is jetted out from the cleaning and polishing material jetting nozzle 84. The purpose of having the flow control valve 854 and the electromagnetic valve 855 is to prevent extreme fluctuation of the flow of gas that flows from Area II 12 to the Roots vacuum pump 86 caused by the status change between jetting out and not jetting out of compressed air from the cleaning and polishing jetting nozzle 84.

The cleaning and polishing material jetting nozzle 84 is connected to a cleaning and polishing material force-feeding tank 846, a pressure gauge PB, a pressure control valve Vb, an electromagnetic valve 847 and an air compressor in that order from the downstream side by a blast hose 945.

Mainly in reference to Fig. 11, the gas nozzle 823 of the electric arc thermal spray gun 82 is connected to a pressure gauge PG, a pressure control valve Vg and the air compressor 85 in that order from the downstream side by an air hose 831.

The compressed air intake 829 installed at each end of the upstream side of the two flexible conduits 828 connected to the electric arc thermal spray gun 82 is connected to a flow control valve 832 and the air compressor 85 in that order from the downstream side to pressurize the inside of the flexible conduits 828 and the electric arc thermal spray gun 82 connected to the flexible conduits 828. A relief valve 833 is installed so that the pressure of the inside of the electric arc thermal spray gun 82 is the same as the pressure of Area I 11 or that the pressure of the inside of the electric arc thermal spray gun 82 is maintained at a little higher level than the pressure of Area I 11.

Being fed inside the flexible conduits 828 are energized wires 821. The wires 821 are fed out by the wire feeding device 83. If the pressure of the liquid outside the flexible conduits 828 is greater than the pressure of the gas inside the flexible conduit, the liquid will enter the flexible conduits 828, and may destroy their electric non-conductance.

Controlling methods of each of the pressure control valves described above will be explained below in reference to Fig. 10 and Fig. 11 mainly.

First, when the Device is immersed in liquid, the pressure of the liquid that surrounds the Device increases as the depth increases. For this reason, the pressures of Area I 11 and Area II 12 are so controlled that the difference in pressure between Area I 11 and the liquid and the difference in pressure between Area II 12 and the liquid are kept constant if and when the pressure of the liquid increases. If the pressure of the liquid is much greater than the pressure of Area II 12, the pressure of the liquid will press the Device against the surface of the object 1 with great force, and the Device will need extremely strong power in order to move along the surface of the object 1.

For this reason, the pressure control valve V1 is so controlled as to achieve P1 = Pw + Pm while the value of Pw may fluctuate, where Pw is the gauged pressure of the liquid surrounding the Device adhering to the surface of the object immersed in liquid, P1 is the gauged pressure of the gas in Area I 11, and P2 is the gauged pressure of the gas in Area II 12, and the pressure control valve V2 is so controlled as to achieve P2 = Pw - Pn, where the value of Pm may be selected from the pressure range between 20 mmHg and 500 mmHg and the value of Pn may be selected from the pressure range between 20 mmHg and 500 mmHg.

Secondly, when the gas nozzle 823 of the electric arc thermal spray gun 82 jets out compressed air into Area I 11, the pressure of the compressed air is so controlled that the difference in pressure between the Area I 11 and the compressed air is kept constant. If the difference in pressure between Area I 11 and the compressed air decreases, the flow of the compressed air will decrease, and the work being performed on the surface of the object 1 using the compressed air will suffer imperfection.

For this reason, a device that has the spout of the gas nozzle 823 situated inside Area I 11 or at the area connected to Area I 11, has the pressure valve Vg so controlled as to achieve PG = Pw + Pm + Pg while the value of Pw may fluctuate, where PG is the gauged pressure of the pressure control valve Vg, where the value of Pg may be selected from the pressure range equal to or higher than 2 kgf/cm2.

Fourthly, when the energized wires 821 are fed to the Area I 11 through the flexible conduits 828, as in the case of the electric arc thermal spray gun 82, the pressure of the gas inside the flexible conduits 828 is so controlled that the difference in pressure between the liquid outside the flexible conduits 828 and the gas therein is kept constant. If the pressure of the liquid outside the flexible conduits 828 is greater than the pressure of the gas inside the flexible conduit, the liquid will enter the flexible conduits 828, and may destroy their electric non-conductance.

For this reason, a device that has the outlets on the downstream side of the flexible conduits 828 opened inside Area I 11 or at the area connected to Area I 11, has the pressure of the inside of the flexible conduits 828 so controlled by injecting compressed air into the flexible conduits 828 as to achieve PC = Pw + Pm or PC□Pw + Pm while the value of Pw may fluctuate, where PC is the gauged pressure of the internal gas at the closest proximity to the downstream side exit of the flexible conduits 828.

In case of a device, different to some degree from the device of an embodiment example of the present invention, that has a flexible conduit through which energized wire, such as wire for an electric arc thermal spray gun that constitutes part of a device which acts on the surface of an object, with the outlet on the downstream side of the flexible conduit opened inside Area II 12 or at an area connected to Area II 12, the pressure of the inside of the flexible conduit is so controlled by injecting compressed air into the flexible conduit as to achieve PC□Pw while the value of Pw may fluctuate, where PC is the gauged pressure of the internal gas at the closest proximity to the downstream side exit of the flexible conduit.

Actions and effects of the Device described above will be explained next in reference to Fig. 10 and Fig. 11 mainly.

The Device is immersed in liquid at a shallow depth. The end of each of the outer sealing member 31 and the inner sealing member 32 is caused to contact the surface of the object 1, upon which time, the Roots vacuum pump 86 is turned on and the electromagnetic valve 852 is opened, and compressed air is flowed into Area I 11. This results in a higher pressure inside Area I 11 than the liquid that surrounds the Device. The gas and liquid inside Area I 11 flows into Area II 12 through the electromagnetic valve 855 which is open, through the gap between the inner sealing member 32 and the surface of the object 1, out of the Device through the gap between the outer sealing member 31 and the surface of the object 1, and out of the Device through the flow control valve 853. Upon passage of a short time period, the entire liquid inside Area I 11 will have flowed out of the Device. The liquid inside Area II 12 and the liquid that flowed from Area I 11 to Area II 2 together with gas are suction-transported by the suction action of the Roots vacuum pump 86 (the mixture of gas and liquid being transported) and the entire liquid inside Area II 12 is gathered and collected by the cleaning and polishing material collector/dust collector 862.

When the pressure of Area II 12 is maintained at a certain desired level, the pressure of Area 1 11 presses the free end of the inner sealing member 32 toward the direction of the surface of the object 1, thereby maximally preventing the gas inside Area I 11 from flowing into Area II 12. The pressure of Area I 11 also presses the free end of the outer sealing member 31 toward the direction of the surface of the object 1, thereby preventing the liquid from flowing into Area I 11. Thus prevented is the flow of the liquid into Area I 11 and Area II 12.

When the Roots vacuum pump 86 is turned on, the pressure of Area II 12 becomes lower than the pressure of the liquid that surrounds the Device. The Device is caused to be pressed against the surface of the object 1 by the pressure of the liquid. The Device is thus suction-adhered to the surface of the object 1. When the wheels 41 are activated at this time using a driving means such as a geared motor (not illustrated), the Device will move along the surface of the object 1.

Actions and effects of a device that acts on the surface of the object 1 will be described next. A cleaning and polishing material jetted out together with compressed air at a high speed from the cleaning and polishing material jetting nozzle 84 installed at Area II 12 blasts the surface of the object 1 and removes foreign materials such as rust that adheres to the surface of the object 1, as well as roughening the surface. The used cleaning and polishing material and dust are suction-transported through the air hose 861 that also serves as a suction hose into the cleaning and polishing material collector/dust collector 862. The cleaned gas after the cleaning and polishing material and dust are collected by the collector 862 is suctioned by the Roots vacuum pump 86 for discharge into the atmosphere.

With respect to the electric arc thermal spray gun 82 installed at Area I 11, the wires for thermal spraying 821 are instantaneously heated by the heat of the arc and melt into minute particles, which are in turn made into finer particles (or a mist-like state) by the action of compressed gas such as compressed air jetted out of a gas nozzle 823, are dispersed while being cooled and collide against the surface of the object, forming molten metal film. Part of the compressed air jetted out of the gas nozzle 823 flows out of the Device through the gap between the outer sealing member 31 and the surface of the object 1, and part of the same flows into Area II 12 through the gap between the inner sealing member 32 and the surface of the object 1, and is suction-transported through the air hose 861 that also serves as a suction hose.

The electric arc thermal spray gun 82 makes continuous circular motion in oscillation between the clockwise movement to 60 degrees and the counterclockwise movement to 60 degrees within the angular range of 60 degrees in total between 30 degrees clockwise and 30 degrees counterclockwise with the position shown in Fig. 1 as the center position. When the device of an embodiment example of the present invention moves to the right, the electric arc thermal spray gun 82 assumes the position 180 degrees in the opposite direction from the position shown in Fig. 1. At this time, the electric arc thermal spray gun 82 makes continuous circular motion in oscillation between the clockwise movement to 60 degrees and the counterclockwise movement to 60 degrees within the angular range of 60 degrees in total between 30 degrees clockwise and 30 degrees counterclockwise with the position rotated and moved by 180 degrees from the position shown in Fig. 1 as the center position. That is to say that, in order to start a spraying operation of a molten material immediately upon completion of a blasting operation of a cleaning and polishing material, the electric arc thermal spray gun 82 is always positioned behind the cleaning and polishing material jetting nozzle 84 in relation to the direction of the movement of the Device.

Effects of the Device of a preferred embodiment example of the present invention described above will be explained below.

The Device of the present invention is so made that the pressure of gas inside Area I 11 is kept at a higher lever than the pressure of liquid that surrounds the Device, thereby preventing the liquid from entering Area II 12, and that the pressure of gas inside Area II 12 is kept at a lower level than the pressure of liquid that surrounds the Device, thereby causing the Device to closely adhere to the surface of the object by the action of negative pressure. With the means that maintain the distance between the main casing 2 and the surface of the object 1 at a certain set distance and move along the surface of the object 1, the Device moves along the surface of the object while closely adhering to the surface of the object 1 immersed in liquid.

The Device has two areas: Area I 11 and Area II 12, and Area I 11 may be used as the spraying area of a molten material and Area II 12 may be used as the blasting area of a cleaning and polishing material, to give an example.

Further, the Device is so made as to control the pressure of an area filled with gas so that the difference in pressure between the area filled with gas and liquid that surrounds the device is kept constant when the pressure of the liquid increases as the depth increases.

Further, the Device is so made as to control the pressure of compressed gas when it is jetted into an area filled with gas so that the difference in pressure between the area filled with gas and the compressed gas is kept constant.

Further, the Device is so made as to control the pressure of gas inside the flexible conduits 828 when energized wires 821 are fed through the flexible conduits 828 so that the difference in pressure between the liquid outside the flexible conduits 828 and the gas inside the flexible conduits 828 is kept constant.

Further, the mechanism that allows a device, such as the cleaning and polishing material jetting nozzle 84 or the electric arc thermal spray gun 82, that acts on the surface of the object 1 to make reciprocal motion inside an area filled with gas and along the surface of the object 1 is so configured as to avoid any entry of external liquid into the area filled with gas.

Further, the electric arc thermal spray gun is always positioned behind the cleaning and polishing material jetting nozzle 84 in relation to the direction of the movement of the Device so that a spraying operation of a molten material may be commenced immediately upon completion of a blasting operation of a cleaning and polishing material.

The device of a preferred embodiment example of the present invention was described above. The device of the present invention is not limited to the preferred embodiment example, but may have various other embodiments within the scope of the present patent application.

In reference to the first problem and the effects of the present invention that solves such problem, when a cleaning and polishing material is blasted onto the surface of an object immersed in liquid using compressed air, for example, to roughen the surface, upon which time, the used cleaning and polishing material is to be recovered and collected in a container located on land using air suction, the surrounding liquid must be disallowed to enter the blasting area of the cleaning and polishing material. There are various other operations that must also disallow the entry of liquid into the area of the surface of an object being worked on, similar to the case of the blasting operation of a cleaning and polishing material. For example, an operation that uses a thermal spraying device, a device that adheres molten materials to surfaces, such as a welding device, a device that adheres plastic sheets to surfaces, a device that sprays paint or glue onto surfaces, and a device that heat-processes surfaces is affected adversely by the entry of liquid into the area of the surface of an object being worked on. These devices will exhibit better performance when the surface of the object being worked on is in contact with gas than when it is in contact with liquid.

A device that works on the surface of an object whose performance is adversely affected by the entry of liquid into the area of the surface of the object being worked on, as described above, needs to have an area free from the entry of liquid and filled with gas.

The device of the present invention has a mechanism that prevents liquid from entering the area of the surface of an object that is being worked on.

In reference to the second problem and the effects of the present invention that solves such problem, when a metal, such as wire, or particles is/are molten and the molten minute particles are sprayed onto the surface of an object for coating purposes, i.e., when the surface of an object is thermal-sprayed, the surface of the object needs to be prepared in advance by blasting a cleaning and polishing material to roughen the surface. However, it is difficult to spray a molten material and to blast a cleaning and polishing material within the same space or area. In such a case, the device needs to have two areas; one area for spraying a molten material and the other area for blasting a cleaning and polishing material. Especially in case of a thermal spraying operation on the surface of an object immersed in liquid, the device must, as a necessary condition, have both the area for spraying a molten material and the area for blasting a cleaning and polishing material. In such a case, it is essential to be able to start spraying a molten material immediately upon completion of the blasting of a cleaning and polishing material. Additionally, the area of the surface of the object being blasted with a cleaning and polishing material or being sprayed with a molten material needs to be filled with gas to prevent liquid from entering therein.

The device of the present invention has two areas where the surface of an object is worked on, one for spraying a molten material and the other for blasting a cleaning and polishing material, to give an example, and liquid is prevented from entering these areas.

In reference to the third problem and the effects of the present invention that solves such problem, when the Device immersed in liquid has an area filled with gas, the pressure of the area filled with gas needs to be controlled so that the difference between the pressure of the area filled with gas and the pressure of the liquid is kept constant as the liquid pressure may increase because it increases as the depth increases. If the liquid pressure is much greater than the pressure of the area filled with gas, the pressure of the liquid presses the area filled with gas against the surface of the object with great force, and the Device will need extremely strong power to move along the surface.

The device of the present invention is so made as to control the pressure of the area filled with gas so that the difference between the pressure of the area and the pressure of the liquid is kept constant when the pressure of the liquid may increase as the depth increases.

In reference to the fourth problem and the effects of the present invention that solves such problem, when compressed gas is jetted into the area filled with gas, as in the case of the operation of blasting a cleaning and polishing material, the compressed air pressure needs to be controlled so that the difference between the pressure of the area filled with gas and the pressure of the compressed gas is kept constant. If the difference between the pressure of the area filled with gas and the pressure of the compressed gas decreases, the flow of the compressed gas will decrease, and the work being performed on the surface of an object using the compressed gas will suffer imperfection.

The device of the present invention is so made as to control the pressure of compressed gas so that the difference between the pressure of the area filled with gas and the pressure of compressed gas is kept constant.

In reference to the fifth problem and the effects of the present invention that solve such problem, when energized wire is fed into an area filled with gas through a flexible conduit, as in the case of an operation of thermal-spraying a molten material, the pressure of the gas inside the flexible conduit needs to be controlled so that the difference between the pressure of the liquid outside the flexible conduit and the pressure of the gas inside the flexible conduit is kept constant. If the pressure of the liquid outside the flexible conduit is greater than the pressure of the gas inside the flexible conduit, the liquid will enter the flexible conduit, and may destroy its electric non-conductance.

The device of the present invention is so made as to control the pressure of the gas inside the flexible conduit so that the difference between the pressure of the liquid outside the flexible conduit and the pressure of the gas inside the flexible conduit is kept constant.

In reference to the sixth problem and the effects of the present invention that solve such problem, a device that acts on the surface of an object, such as a cleaning and polishing material jetting nozzle or a thermal spray gun, needs to be caused to make reciprocal motion within an area filled with gas and along the surface of an object. A mechanism that allows such reciprocal motion needs to be so configured as to prevent external liquid from entering the area filled with gas.

The device of the present invention has a reciprocal motion mechanism so configured as to prevent external liquid from entering the area filled with gas.

In reference to the seventh problem and the effects of the present invention that solve such problem, in order to be able to commence a spraying operation of a molten material immediately upon completion of a blasting operation of a cleaning and polishing material, the reciprocal motion mechanism needs to be so configured that an electric arc thermal spray gun is always positioned behind a cleaning and polishing jetting nozzle in relation to the direction of the movement of the device.

The device of the present invention has a reciprocal motion mechanism so configured as to have an electric arc thermal spray gun always positioned behind a cleaning and polishing jetting nozzle in relation to the direction of the movement of the device.

### POTENTIAL INDUSTRIAL APPLICATIONS

As described above, the device capable of capable of adhering to and moving along the surface of an object immersed in liquid may be conveniently used as a device that can have various devices which perform various operations on the surface of the object immersed in liquid mounted thereon and can move those devices along the surface of the object. For example, the said device can be conveniently used as a device that performs a blasting operation of a cleaning and polishing material or a spraying operation of a molten material on the surface of a portion immersed in sea water of a marine structure.

Those devices that act on the surface of an object which are mounted on the device of the present invention include thermal spraying devices, devices that allow molten materials to adhere to a surface, such as welding devices, devices that allow plastic sheets to adhere to a surface, devices that spray paint or glue onto a surface, devices that heat-process the surface of an object and various other devices. These devices will exhibit better performance because the surface of the object being worked on is in contact with gas, not with liquid.

## Claims

1. A device capable of adhering to and moving along the surface of an object immersed in liquid, comprising:
the main casing at least comprising an outer casing and an inner casing;
an outer sealing member mounted at the opening of the outer casing, part of which is caused to contact the surface of the object;
an inner sealing member mounted at the opening of the inner casing, part of which is caused to contact the surface of the object; and
a means for moving along the surface of the object while maintaining the distance between the main casing and the surface of the object at a certain distance;
wherein at least the outer casing, the outer sealing member and the inner sealing member, together with the surface of the object, define Area I, and at least the inner casing and the inner sealing member, together with the surface of the object, define Area II.

2. The device capable of adhering to and moving along the surface of an object immersed in liquid described in Claim 1, wherein:
the pressure of gas in Area I is maintained at a higher level than the pressure of the liquid that surrounds the device, and the pressure of gas in Area II is maintained at a lower level than the pressure of gas in Area I.

3. The device capable of adhering to and moving along the surface of an object immersed in liquid described in Claims 1 and 2, wherein:
the outer sealing member is so shaped as to be caused to be pressed against the surface of the object by the difference in pressure between the pressure of gas in Area I and the pressure of the liquid that surrounds the device, and the inner sealing member is so shaped as to be caused to be pressed against the surface of the object by the difference in pressure between the pressure of gas in Area I and the pressure of gas in Area II.

4. The device capable of adhering to and moving along the surface of an object immersed in liquid described in Claims 1 through 3, wherein:
Area I is connected to the source of compressed gas by a flexible hose with a pressure control valve V1 in place between Area I and the source of compressed gas, and Area II is connected to the source of vacuum by a flexible hose with a pressure control valve V2 in place between Area II and the source of vacuum.

5. The device capable of adhering to and moving along the surface of an object immersed in liquid described in Claim 4, wherein:
a pressure control valve V1 is so controlled as to achieve P1 = Pw + Pm while the value of Pw may fluctuate, where Pw is the gauged pressure of the liquid that surrounds the device adhering to the surface of the object immersed in liquid, P1 is the gauged pressure of gas in Area I, and P2 is the gauged pressure of gas in Area II, and a pressure control valve V2 is so controlled as to achieve P2 = Pw - Pn, where the value of Pm may be selected from the pressure range between 20 mmHg and 500 mmHg and the value of Pn may be selected from the pressure range between 20 mmHg and 500 mmHg.

6. The device capable of adhering to and moving along the surface of an object immersed in liquid described in Claims 1 through 5, wherein:
a hole is made at the lower part of Area I to discharge liquid.

7. The device capable of adhering to and moving along the surface of an object immersed in liquid described in Claims 1 through 6, wherein:
a device that acts on the surface of the object is arranged at Area I or Area II or at both Area I and Area II.

8. The device capable of adhering to and moving along the surface of an object immersed in liquid described in Claim 7,
having a nozzle constituting part of the device acting on the surface of the object that jets out compressed gas, and having an opening where the spout of the nozzle is connected to Area I or the inside of Area I, and a pressure valve Vg that supplies compressed gas to the nozzle so controlled as to achieve PG = Pw + Pm + Pg while the value of Pw may fluctuate, where PG is the gauged pressure of the pressure control valve Vg, where the value of Pg may be selected from the pressure range equal to or higher than 2 kgf/cm2.

9. The device capable of adhering to and moving along the surface of an object immersed in liquid described in Claim 7,
having a nozzle constituting part of the device acting on the surface of the object that jets out compressed gas, and having an opening where the spout of the nozzle is connected to Area II or the inside of Area II, and a pressure valve Vb that supplies compressed gas to the nozzle so controlled as to achieve PB = Pw - Pn + Pb while the value of Pw may fluctuate, where PB is the gauged pressure of the pressure control valve Vb, where the value of Pb may be selected from the pressure range equal to or higher than 2 kgf/cm2.

10. The device capable of adhering to and moving along the surface of an object immersed in liquid described in Claim 7,
having a flexible conduit through which energized wire, such as wire for a thermal spray gun that constitutes part of the device that acts on the surface of the subject, passes through, and having an opening where the downstream side exit of the flexible conduit is connected to Area I or the inside of Area I, and compressed gas injected into the flexible conduit the pressure of which is so controlled as to achieve PC = Pw + Pm or PC□Pw + Pm while the value of Pw may fluctuate, where PC is the gauged pressure of the internal gas at the closest proximity to the downstream side exit of the flexible conduit.

11. The device capable of adhering to and moving along the surface of an object immersed in liquid described in Claim 7,
having a flexible conduit through which energized wire, such as wire for a thermal spray gun that constitutes part of the device that acts on the surface of the subject, passes through, and having an opening where the downstream side exit of the flexible conduit is connected to Area II or the inside of Area II, and compressed gas injected into the flexible conduit the pressure of which is so controlled as to achieve PC□Pw while the value of Pw may fluctuate, where PC is the gauged pressure of the internal gas at the closest proximity to the downstream side exit of the flexible conduit.

12. The device capable of adhering to and moving along the surface of an object immersed in liquid described in Claims 7 through 11,
having a ring-shaped sliding member constituting part of the outer casing, or having a ring-shaped sliding member constituting part of the inner casing, or having a ring-shaped sliding member constituting part of the outer casing and a ring-shaped sliding member constituting part of the inner casing, such sliding member/s making circular motion along the surface of the object, and having a device that acts on the surface of the object mounted on the sliding member/s.

13. The device capable of adhering to and moving along the surface of an object immersed in liquid described in Claim 12, wherein:
the outer sliding member or the inner sliding member or both the outer sliding member and the inner sliding member make/s repetitious circular motion in oscillation clockwise and counterclockwise in any angular range of maximum 90 degrees counterclockwise and maximum 90 degrees clockwise, totaling 180 degrees in maximum, in the direction of the movement of the device with that direction as the center line.

14. The device capable of adhering to and moving along the surface of an object immersed in liquid described in Claim 13, wherein:
the outer sliding member has a device that acts on the surface of the object in the opposite direction of approximately 180 degrees of the direction of the movement of the device, said outer sliding member making repetitious circular motion in oscillation clockwise and counterclockwise in any angular range of maximum 90 degrees counterclockwise and maximum 90 degrees clockwise, totaling 180 degrees in maximum, in the direction of the movement of the device with that direction as the center line, and, when the direction of the movement of the device is reversed by 180 degrees, said outer sliding member rotating approximately 180 degrees, i.e., the device that acts on the surface of the object moving to the opposite direction of approximately 180 degrees to face the new direction, followed by the outer sliding member making repetitious circular motion in oscillation clockwise and counterclockwise in any angular range of maximum 90 degrees counterclockwise and maximum 90 degrees clockwise, totaling 180 degrees in maximum, in the new direction of the movement of the device with that new direction as the center line.

15. The device capable of adhering to and moving along the surface of an object immersed in liquid described in Claims 1 through 14,
having a nozzle constituting part of the device acting on the surface of the object which jets out compressed gas and having an opening where the spout of the nozzle is connected to Area II or the inside of Area II, and having a valve which connects Area I and Area II, wherein the valve is open when there is no compressed gas jetted out of the nozzle and the valve is closed when there is compressed gas jetted out of the nozzle.
